# EUROPÄISCHE PATENTANMELDUNG

(11) **EP 1 938 715 A1**
(43) Veröffentlichungstag der Anmeldung: **02.07.2008**
(21) Anmeldenummer: 06127239.9
(22) Anmeldetag: 27.12.2006
(51) Int. Cl.: A47G 9/10

(54) **Nackenstützkissen**

(71) Anmelder: Matra AG, 4112 Flüh (CH)
(72) Erfinder: Dipl.-Ing. Schwenk, Hans Ulrich, 72766, Reutlingen (DE)
(74) Vertreter: BOVARD AG

(57) **Zusammenfassung**

Die Erfindung geht aus von einem Schaumstoff-Polsterkörper (1) mit drei übereinander liegenden Schichten (4,5 und 6) aus Schaumstoff, von denen die mittlere Schicht (5) größere Stauchhärte aufweist als die beiden äußeren Schichten (4 und 6) und die Höhenlage der mittleren Schicht im Schaumstoff-Polsterkörper dessen Nachgiebigkeit beeinflusst. Sie macht sich die Unterschiedlichkeit der Nachgiebigkeit durch die Lage der mittleren Schicht im Schaumstoff-Polsterkörper für ein Nackenstützkissen in dem Sinne zu Nutze, dass sie dessen Nachgiebigkeit in Längsrichtung oder/und in Querrichtung durch die Lage der steiferen mittleren Schicht (5) und die Dicke der anderen beiden Schichten (4 und 6) in den unterschiedlichen Bereichen des Nackenstützkissens funktionsgemäß variiert.

## Beschreibung

### Technisches Gebiet

Die Erfindung betrifft ein Nackenstützkissen mit einer mittleren von drei übereinander liegender Schaumstoffschichten, die eine größere Härte aufweist als die in ihrer Dicke über die Ausdehnung des Nackenstützkissens wechselnden anderen beiden Schaumstoffschichten.

### Stand der Technik

Aus der EP 1048 249 A1 ist eine Matratze bekannt, die drei übereinander liegende Schaumstoffschichten aufweist: je eine untere und eine obere Schicht aus Schaumstoff mit geringerer Steifigkeit und einer mittleren Schicht aus Schaumstoff mit deutlich höherer Steifigkeit. Die Dicke der Schichten aus Schaumstoff mit geringerer Steifigkeit ändern sich über die Länge der Matratze, während die Dicke der Schicht aus Schaumstoff mit höherer Steifigkeit im wesentlichen gleich bleibt.

Gleich bleibt auch die Gesamtdicke der Matratze über ihre Länge. Damit ändern sich die Dicken der oberen und der unteren Schicht in umgekehrtem Sinne: wenn die Dicke der obern Schicht zunimmt, vermindert sich die Dicke der unteren Schicht. Damit ändert sich aber auch die Lage der mittleren Schicht: Bei zunehmende Dicke der oberen Schicht liegt sie tiefer in der Matratze und umgekehrt.

Die Nachgiebigkeit der Matratze gegenüber Belastung wird aber von der Dicke der oberen Schaumstoffschicht über der härteren Mittelschicht bestimmt - eine tiefer in der Matratze liegende Mittelschicht macht die Matratze in diesem Bereich nachgiebiger und weicher.

### Allgemeine Beschreibung der Erfindung

Der Erfindung war die Aufgabe gestellt, dieses Prinzip der unterschiedlichen Nachgiebigkeit durch eine Mittelschicht aus härterem Schaumstoff in bestimmten Bereichen auf ein Nackenstützkissen zu übertragen. Dabei ist zu beachten, dass ein Nackenstützkissen im Gegensatz zu einer Matratze, die in aller Regel nur in Längsrichtung Bereiche mit unterschiedlicher Nachgiebigkeit aufweist, in zwei Dimensionen (sowohl zwischen oben und unten als auch zwischen rechts und links) Bereiche mit unterschiedlicher Nachgiebigkeit aufweisen soll.

Sie löst diese Aufgabe mit den im Kennzeichen des Hauptanspruches genannten Merkmalen. In einer ersten Ausführungsform weist zumindest die untere Schaumstoffschicht des Nackenstützkissens in einem seiner waagrechten Mittelbereiche, vorzugsweise in dem zwischen der linken und der rechten Seite des Nackenstützkissens liegenden Bereich gegenläufige Einsenkungen bzw. Erhebungen auf. Dadurch wird die Mittelschicht verlagert und das Nackenstützkissen weist in dem Bereich, in dem die Mittelschicht abgesenkt ist, eine größere Nachgiebigkeit auf. Dies lässt den Kopf eines auf dem Nackenstützkissen Liegenden tiefer einsinken als in Seitenlage, in der er gegenüber der Schulter stärker unterstützt wird.

In einer zweiten Ausführungsform weist zumindest die untere Schaumstoffschicht des Nackenstützkissens in beiden sich kreuzenden waagrechten Mittelbereichen Einsenkungen bzw. Erhebungen auf. Dadurch wird erreicht, dass sowohl in Rückenlage als auch in Seitenlage der Nacken eines auf dem Nackenstützkissen Liegenden stärker unterstützt wird.

Es versteht sich, dass auch die obere Schaumstoffschicht mit den Einsenkungen bzw. Erhebungen der unteren Schaumstoffschicht mit gleichlaufenden Einsenkungen bzw. Erhebungen versehen werden kann, durch die die lokale Nachgiebigkeit des Nackenstützkissens zusätzlich verstärkt werden kann.

Wenn die untere Schaumstoffschicht Einsenkungen bzw. Erhebungen in nur einer Richtung aufweist, kann sie im Konturschnitt gefertigt werden. Wenn sie dagegen in zwei zueinander senkrechten Richtungen mit Einsenkungen bzw. Erhebungen versehen ist, erfordert sie zur ihrer Formgebung Kompressionsschnitt oder Formschäumung.

### Spezielle Beschreibung der Erfindung

In den Figuren der Zeichnung sind Ausführungsbeispiele der Erfindung schematisch dargestellt. Es zeigen
- Fig. 1: die perspektivische Ansicht eines Nackenstützkissens mit sich im mittleren Längsbereich abgesenkter harter Mittelschicht;
- Fig. 2: die perspektivische Ansicht eines Nackenstützkissens mit sich im mittleren Querbereich abgesenkter harter Mittelschicht;
- Fig.: 3 die perspektivische Ansicht eines Nackenstützkissens mit sich sowohl im mittleren Querbereich als auch im mittleren Längsbereich abgesenkter harter Mittelschicht.

Das Nackenstützkissen 1, 1' 1" weist im Längsbereich, also in Richtung der Achse eines auf dem Nackenstützkissen Liegenden, eine obere Nackenwulst 2 und eine untere Nackenwulst 3 auf. Die eine Nackenwulst ist höher als die andere, das Nackenstützkissen kann gedreht eingesetzt werden, so dass die eine oder die andere Nackenwulst unter dem Nacken zu liegen kommt.

Das Nackenstützkissen 1, 1' 1" besteht aus drei Schaumstoffschichten 4 , 5 und 6. Die obere Schaumstoffschicht 4 und die untere Schaumstoffschicht 6 bestehen aus verhältnismäßig weichem Schaumstoff mit einer Stauchhärte, die ein angenehmes Liegen auf dem Nackenstützkissen ermöglicht. Die obere Schaumstoffschicht 4 kann darüber hinaus mit einer hier nicht wiedergegebenen Profilierung bspw. in Form einer Wellung versehen sein, die die Weichheit des Nackenstützkissens weiter erhöht.

Die mittlere Schaumstoffschicht 5 besteht auf vergleichsweise steifem Schaumstoff mit erheblich höherer Stauchhärte als die der anderen beiden Schichten. Sie beschränkt demgemäss die Weichheit und das Einsinken der oberen Schaumstoffschicht 4 in die untere Schaumstoffschicht 6 um so mehr, je dünner die obere Schaumstoffschicht ist, je dichter also die mittlere Schaumstoffschicht 5 unter der oberen Schaumstoffschicht 4 liegt.

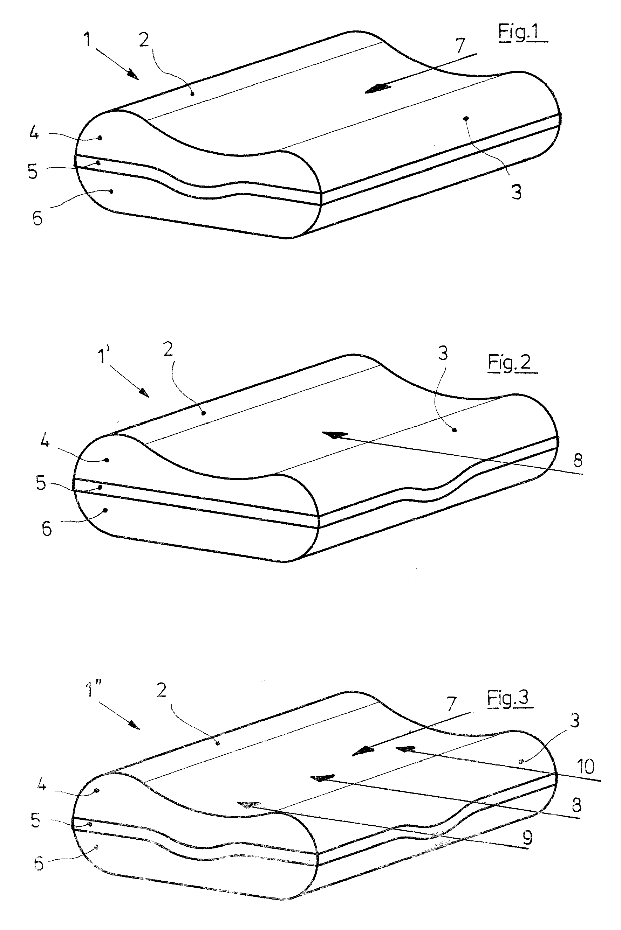

Da die mittlere Schaumstoffschicht 5 im mittleren Längsbereich 7 des Nackenstützkissens 1 der Figur 1 tiefer im Nackenstützkissen angeordnet ist als im Bereich der oberen Nackenwulst 2 und der unteren Nackenwulst 3 ist das Nackenstützkissen dort weicher und nachgiebiger als in den beiden Nackenwulst-Bereichen. Der Kopf kann im Bereich 7 tiefer einsinken, der Nacken ist stärker unterstützt.

Beim Nackenstützkissen 1' der Figur 2 liegt die steife mittlere Schaumstoffschicht 5 im mittleren Querbereich 8 tiefer als in den randständigen Querbereichen 9 und 10. Dies führt dazu, dass der Kopf in diesem mittleren Querbereich - also in Rückenlage - tiefer einsinken kann als in den Randbereichen. Dagegen liegt er in Seitenlage auf den Randbereichen höher.

Beim Nackenstützkissen 1" der Figur 3 liegt die mittlere Schaumstoffschicht 5 sowohl im mittleren Längsbereich 7 als auch im mittleren Querbereich 8 tiefer als in den Nackenstützbereichen 2 und 3 und in den seitlichen Randbereichen 9, 10. Dies kombiniert die beiden bezüglich der Nackenstützkissen 1 und 1' beschriebenen Stützwirkungen auf den Kopf bzw. den Nacken.

Die Einsenkungen bzw. Erhöhungen in den Schaumstoffschichten 4 und 6 können in den Ausführungsformen der Figuren 1 und 2 durch Konturschnitt mittels eines umlaufenden oder oszillierenden Bandmessers erzeugt werden. In der Ausführungsform der Figur 3 können die Einsenkungen bzw. Erhöhungen durch Form- oder Kompressionsschnitt oder durch Formschäumung der Schaumstoffschichten 4, 6 erzielt werden. Für die mittlere Schaumstoffschicht 5, die auch zwei- und mehrschichtig ausgeführt sein kann, ist durchgehend gleiche Schichtdicke vorgesehen. Es versteht sich jedoch, dass auch diese wechselnde Dicke aufweisen kann, um ihre Stützwirkung nicht nur durch ihre Höhenlage im Nackenstützkissen, sonder zusätzlich durch ihre funktionsgerechte wechselnde Steifigkeit zu erreichen.

Der Gegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Bezugszahlenliste

- 1, 1', 1": Nackenstützkissen
- 2, 3: Nackenwülste
- 4, 5, 6: Schaumstoffschichten
- 7: mittlerer Längsbereich
- 8: mittlerer Querbereich
- 9, 10: seitliche Randbereiche

## Patentansprüche

1. Nackenstützkissen mit einer mittleren von drei übereinander liegenden Schaumstoffschichten, die eine größere Härte aufweist als die in ihrer Dicke über die Ausdehnung des Nackenstützkissens wechselnden anderen beiden Schaumstoffschichten, **dadurch gekennzeichnet, dass** die obere Schaumstoffschicht (4) und die untere Schaumstoffschicht (6) in mindestens einem ihrer waagrechten Mittelbereiche (7, 8) gegenläufige Einsenkungen bzw. Erhebungen aufweisen und die gleichbleibend dicke mittlere Schaumstoffschicht (5) zwischen sich einschließen.

2. Nackenstützkissen nach Anspruch 1, **dadurch gekennzeichnet, dass** sowohl die obere Schaumstoffschicht (4) als auch die untere Schaumstoffschicht (6) in ihren sich kreuzenden waagrechten Mittelbereichen (7, 8) gegenläufige Einsenkungen bzw. Erhebungen aufweisen und die gleichbleibend dicke mittlere Schaumstoffschicht (5) zwischen sich einschließen.

3. Nackenstützkissen nach Anspruch 1 oder 2, **dadurch gekennzeichnet, dass** die mittlere Schaumstoffschicht (5) aus einer oder mehreren Schaumstoffplatten besteht.

4. Verfahren zum Herstellen eines Nackenstützkissens nach Anspruch 1 oder 2, **dadurch gekennzeichnet, dass** die obere Schaumstoffschicht (4) und die untere Schaumstoffschicht (6) durch Konturschnitt, Kompressionsschnitt oder durch Formschnitt gefertigt werden.

5. Verfahren zum Herstellen eines Nackenstützkissens nach Anspruch 1 oder 2, **dadurch gekennzeichnet, dass** die obere Schaumstoffschicht (4) und die untere Schaumstoffschicht (6) durch Formschäumung gefertigt werden.
